# EUROPÄISCHE PATENTSCHRIFT

(11) **EP 2 357 518 B1**
(45) Veröffentlichungstag und Bekanntmachung des Hinweises auf die Patenterteilung: **17.06.2015**
(21) Anmeldenummer: 11001042.8
(22) Anmeldetag: 09.02.2011
(51) Int. Cl.: G02F 1/13357, G02B 6/00, F24F 11/00

(54) **Monochrome Displays zur sichtbaren Signalisierung von Reglerzuständen**
Monochromatic displays for visual signalling of regulator states
Ecrans monochromes pour la signalisation visible d'états de régulateurs

(30) Priorität: 09.02.2010 DE 102010007476
(43) Veröffentlichungstag der Anmeldung: 17.08.2011
(73) Patentinhaber: Alre-IT Regeltechnik GmbH, 12277 Berlin (DE)
(72) Erfinder: Schmieder, Jürgen, 15537 Gosen - Neu Zittau (DE)
(74) Vertreter: Stippl, Hubert

(56) Entgegenhaltungen:
- EP-A1- 1 767 986
- DE-A1-102006 048 878
- DE-A1-102007 043 379
- US-A1- 2004 047 151

## Beschreibung

Die vorliegende Erfindung betrifft monochrome Displays zur sichtbaren Signalisierung von Reglerzuständen insbesondere Temperaturregler gemäß dem Oberbegriff des Anspruches 1.

Aus dem Stand der Technik sind Displays mit Flüssigkristallanzeigen sowie deren Anwendungen allgemein bekannt. Flüssigkristallanzeigen bestehen im Wesentlichen aus einer durchscheinbaren Flüssigkristallglasplatte, bei der eine Vielzahl von Flüssigkristallelemente in geeigneter Matrixform zwischen zwei Scheiben eingebunden ist. Je nach Art der verwendeten Flüssigkristalle können damit monochrom- oder auch farb-LC Displays realisiert werden. Da die Flüssigkristalle optisch passive Elemente sind, deren Transmissionsgrad gesteuert wird, sind meist geeignete Beleuchtungsmaßnahmen vorgesehen. Dazu kann beispielsweise auf der dem Benutzer gegenüberliegenden Seite des Flüssigkristallglases eine Hintergrundbeleuchtung mit geeigneten Beleuchtungsmitteln vorgesehen sein. Die Hintergrundbeleuchtung ist dabei geeigneterweise derart ausgebildet und angeordnet, dass sie das Flüssigkristallglas vollständig und gleichmäßig über die ganze Anzeigefläche ausleuchtet.

Beispielsweise ist aus der DE 103 38 691 B4 eine Hintergrundbeleuchtung für eine Flüssigkristallanzeige bekannt, die eine möglichst konstante Verteilung der spektralen Farbanteile in der Leuchtdichte einer Flüssigkristallanzeige gewährleistet, wobei neben einem vorhandenen ersten Beleuchtungsmittel mit einem festen Arbeitspunkt noch zumindest ein weiteres Beleuchtungsmittel vorgesehen ist, dessen Strahlungsfluss veränderbar ist und das in geeigneter Weise angeordnet ist. Hierdurch können die spektralen Farbanteile in der Leuchtdichte der Flüssigkristallanzeige verändert werden. Die Anordnung der weiteren Beleuchtungsmittel ist dabei derart vorgesehen, dass eine gleichmäßige Veränderung der Farbanteile über die gesamte Anzeigefläche der Flüssigkristallanzeige erfolgt.

Aus der EP 1 767 986 A1 ist eine monochrome Anzeigevorrichtung mit einer Hintergrundbeleuchtung bekannt, wobei die Hintergrundbeleuchtung eine Licht mit einer ersten Farbe abgebende erste Lichtquelle, ein Licht mit einer zweiten Farbe abgebende Lichtquelle, einen mit der ersten Lichtquelle gekoppelten ersten Lichtleiter und einen mit der zweiten Lichtquelle gekoppelten zweiten Lichtleiter aufweist. Die beiden Lichtleiter sind dabei derart dicht nebeneinander und von einander getrennt hinter der Anzeige der Anzeigevorrichtung angeordnet, dass sie die gesamte Anzeige flächenhaft und einen dem ersten Lichtleiter zugeordneten Bereich der Anzeige mit der ersten Farbe und einen den zweiten Lichtleiter zugeordneten Bereich der Anzeige mit der zweiten Farbe hinterleuchten.

Die eingangs genannte Hintergrundbeleuchtung der DE 103 38 691 B4 ermöglicht es mittels einem ersten und weiteren Beleuchtungsmitteln eine möglichst konstante Verteilung der spektralen Farbanteile in der Leuchtdichte einer Flüssigkristallanzeige bereitzustellen, wobei allerdings die Hintergrundbeleuchtung über die gesamte Flüssigkristallanzeige konstant gehalten wird und es nicht möglich ist einzelne Bereiche der Flüssigkristallanzeige farbig hervorzuheben. Die Anzeigevorrichtung der EP 1 767 986 A1, auf der der Oberbegriff des Anspruchs 1 basiert, ermöglicht zwar die Hintergrundbeleuchtung einer Anzeigevorrichtung mit einer ersten und zweiten Farbe bereitzustellen, wobei hierfür jedoch zwei voneinander getrennte Lichtleiter vorgesehen sind, was zum Einen lediglich eine scharfe Abgrenzung der voneinander getrennten verschiedenfarbigen Bereiche ermöglicht und zum Anderen beträchtlich aufwendig und dementsprechend teuer herstellbar ist.

Die DE 10 2007 043 379 A1 zeigt eine Anzeigevorrichtung mit einer LCD-Anzeigefläche mit einem in mehreren Farben hinterleuchtbaren Symbolfeld sowie mit einer Lichtabschottungseinheit zur Abschottung des Symbolfelds gegenüber Streustrahlung, wobei das Symbolfeld in mehrere aneinandergrenzende Teilfelder unterteilt ist, welche jeweils von einzelnen Lichtquellen angestrahlt werden können.

Aus der US 2004/0047151 A1 ist eine optoelektronische Anzeigeeinrichtung bekannt, zur monochromen Hinterleuchtung eines Displays an der Rückseite einer Leiterplatte LEDs positioniert sind, die durch Öffnungen in der Leiterplatte hindurch das Display beleuchten. Zwischen der Leiterplatte und dem Display befindet sich eine Streuplatte, um eine möglichst homogene, monochrome Hinterleuchtung des Displays zu erreichen.

Aufgabe der vorliegenden Erfindung ist daher ein monochromes Display bereitzustellen, das es ermöglicht wahlweise vorbestimmte Bereiche eines grundsätzlich monochromen Displays mit wenigstens einer ausgewählten Farbe zu überstrahlen, so dass einem Betrachter ein ästhetischer visueller Gesamteindruck entsteht, wobei getrennte Lichtquellen für die Hintergrundbeleuchtung des Displays und des vorbestimmten Bereichs vorhanden sind, die getrennt steuerbar ausgebildet sind.

Die Aufgabe wird durch die Merkmale des Anspruches 1 gelöst. Vorteilhafte Ausführungen ergeben sich aus den Merkmalen der Unteransprüche und der Beschreibung in Verbindung mit einer Zeichnung. Hierzu zeigt:
- Fig. 1: eine Draufsicht auf ein Display nach der Erfindung;
- Fig. 2a: einen Schnitt entlang der Linie A-A eines erfindungsgemäßen Displays nach einer ersten Ausführung der vorliegenden Erfindung;
- Fig. 2b: eine Abwandlung des Displays von Fig. 2a;
- Fig. 2c: eine Abwandlung des Displays von Fig. 2b;
- Fig. 2d: eine nicht zur Erfindung gehörige Abwandlung des Displays von Fig. 2c;
- Fig. 3: eine weitere Abwandlung des Displays von Fig. 2c; und
- Fig. 4: eine Draufsicht auf ein Display gemäß der Erfindung zur Anzeige der Zustände eines Raumtemperaturreglers.

Nach einer Ausführung der vorliegenden Erfindung stellt die vorliegende Erfindung ein monochromes Display 1 dar wie in Anspruch 1 definiert. Unter anderem beinhaltet es wenigstens einen vorbestimmten farbig hervorgehobenen Bereich (10), wobei an einer mit dem vorbestimmten Bereich korrespondierenden Position unterhalb des Displays 1 wenigstens eine Licht emittierende Diode (LED) 3, 30 - vorzugsweise auf einer Leiterplatte 2 zur Ansteuerung des Displays 1 - angeordnet ist. Bei dem erfindungsgemäßen Display handelt es sich insbesondere um ein monochromes Flüssigkristalldisplay, das hinterleuchtet wird und transflektiv oder transmissiv sein kann, wobei durch wenigstens eine hinter dem Display angeordnete LED 3 wenigstens ein vorbestimmter Bereich des Displays farbig oder mehrfarbig hervorgehoben werden kann, so dass insbesondere hierdurch verschiedene Zustände eines Reglers insbesondere eines Raumtemperaturreglers signalisiert werden können. Bei der vorteilhaften Anordnung der LED 3 unterhalb des Displays strahlt das von der LED ausgehende Licht von unten durch das Display 1 und erzeugt auf der Oberfläche des Displays einen vorteilhaft diffusen Bereich 10 mit einer vorbestimmten Farbe, der deshalb eine besonders ästhetische und unaufdringliche Signalwirkung hat.

Nach einer weiteren Ausführung der vorliegenden Erfindung ist wenigstens ein Bereich mit einem vorbestimmten Symbol 101 versehen, was besonders vorteilhaft ist, um insbesondere verschiedene Zustände eines Geräts und insbesondere eines Reglers zu signalisieren, wie beispielsweise: das Gerät ist in Betrieb, ein Warnsignal, die Art des Betriebes des Geräts, etc. Auch die erfindungsgemäße Anordnung von Symbolen an vorbestimmten Bereichen wirkt zusammen mit dem diffusen Licht der LED besonders unaufdringlich und ästhetisch.

Die LED 3 kann hierbei vorteilhaft auf der Bestückungsseite der Leiterplatte 2 angeordnet sein, die der Unterseite des Displays 1 zugewandt ist, wodurch ein erfindungsgemäßes Display mit einer LED unterhalb des Displays besonders einfach und kostengünstig hergestellt werden kann, nachdem die LED zusammen mit den weiteren Bauelementen auf der Leiterplatte bestückt werden kann.

Nach einer Abwandlung der vorliegenden Erfindung kann die Bestückungsseite der Leiterplatte 2 auch der Unterseite des Displays 1 abgewandt angeordnet sein, wobei die LED 30 hierbei in geeigneter Weise als rückstrahlende LED ausgebildet ist und in der Leiterplatte eine Öffnung 20 ausgebildet ist, durch die das Licht der LED das Display von unten bestrahlt. Auch diese Ausführung der vorliegenden Erfindung ist besonders einfach und kostengünstig herzustellen. Unterhalb des Displays 1 ist ein Lichtleiter 11 zur monochromen Hinterleuchtung des Displays 1 angeordnet, so dass das Licht der LED, das sich von der monochromen Hinterleuchtung des Displays unterscheidet, die hervorgehobenen Bereiche des Displays durch den Lichtleiter durchgehend beleuchtet. Hierbei erscheint durch die Streuwirkung des Lichtleitermaterials auf dem Display ein diffuser farbiger Bereich, der sowohl bei aktiver als auch bei inaktiver Hinterleuchtung sichtbar ist. Durch die Streuung des farbigen Lichtes wirkt dieses Signal besonders ästhetisch und unaufdringlich.

Außerdem ist bei den vorstehenden Ausführungen der vorliegenden Erfindung die Beleuchtung mittels der LED vorteilhaft unabhängig vom Backlightaufbau, was ebenfalls einfach bereitzustellen ist und dementsprechend kostengünstig ist.

Der Lichtleiter 11 der vorstehend genannten Ausführung der vorliegenden Erfindung ist auf seiner Unterseite mit einer mehr oder weniger transparenten Folie 12 versehen, wobei das Licht der LED 3/30 die hervorgehobenen Bereiche des Displays durch die Folie und den Lichtleiter durchgehend beleuchtet, und wobei das Licht der LED durch die Folie weiter gedämpft wird, was ebenfalls zu einem ästhetischen und unaufdringlichen Signal führt.

Ein vorstehendes erfindungsgemäßes Display ist besonders geeignet für einen erfindungsgemäßen Regler mit einem vorstehenden erfindungsgemäßen Display, wobei der Regler insbesondere ein Raumtemperaturregler und/oder ein Heizungsregler und/oder ein Klimaregler sein kann.

Durch die Wahl unterschiedlicher LEDs mit verschiedenen Farben oder durch die Wahl mehrfarbiger LEDs kann bei einem vorstehenden Regler insbesondere der Betriebszustand angezeigt werden, wie beispielsweise Heizen, Kühlen, An, Aus, etc. Hierbei kann ein Warnsignal geeigneterweise auch blinkend folgen.

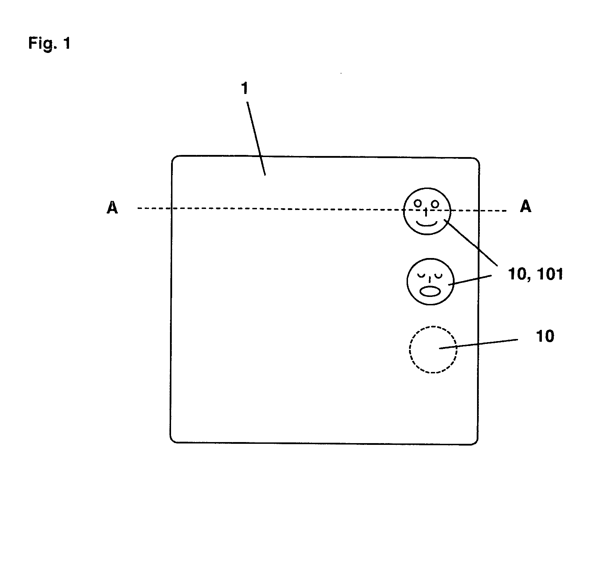

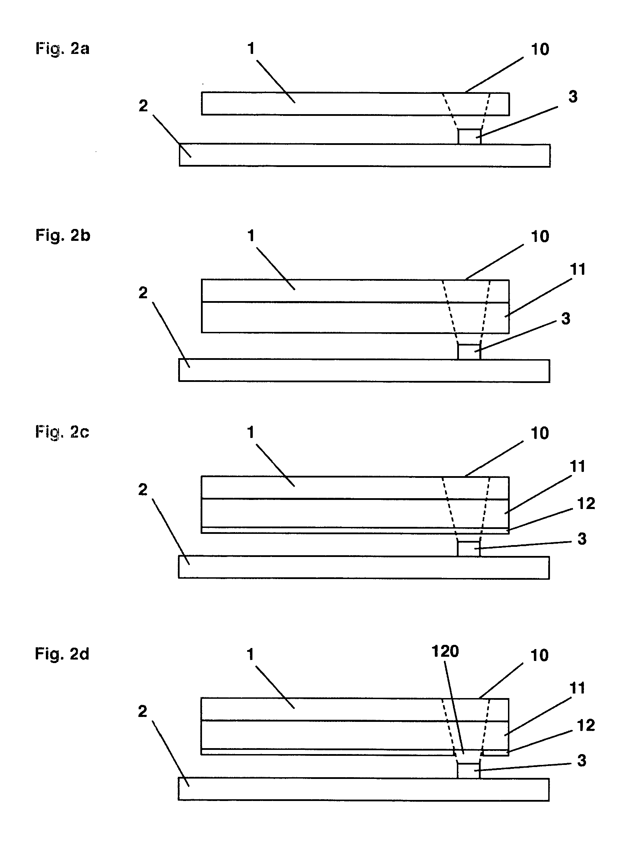

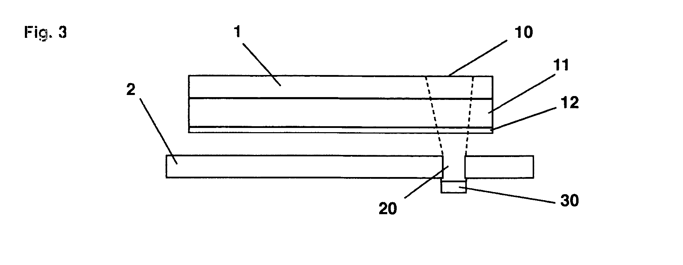

Fig. 1 zeigt eine schematische Draufsicht auf ein erfindungsgemäßes Display 1 mit vorbestimmten farbig hervorgehobenen Bereichen 10, die geeigneterweise als Symbole 101 ausgebildet sein können, wobei an einer mit den vorbestimmten Bereichen 10 korrespondierenden Position unterhalb des Displays 1 jeweils eine LED auf einer Leiterplatte angeordnet ist, wie der schematischen Darstellung von Fig. 2 und Fig. 3 entnehmbar ist, die jeweils einen Schnitt durch das Display 1 von Fig. 1 entlang der Linie A-A von Fig. 1 zusammen mit der schematischen Darstellung einer unterhalb des Displays 1 dargestellten Leiterplatte 2 zeigen, auf deren Bestückungsseite an einer Position, die mit den vorbestimmten Bereichen 10 korrespondiert jeweils eine LED 3 angeordnet ist.

Fig. 2a zeigt einen Schnitt durch ein nicht erfindungsgemäßes Display 1 entlang der Linie A-A von Fig. 1 mit dem Display 1, einem vorbestimmten farbig hervorgehobenen Bereich 10, der Leiterplatte 2 und der LED 3, die unterhalb des vorbestimmten farbig hervorgehobenen Bereichs 10 angeordnet ist und deren Licht durch das Display 1 durchtritt und dabei gestreut wird, so dass der farbig hervorgehobene Bereich 10 als diffuser farbiger Bereich erscheint.

Fig. 2b zeigt eine nicht erfindungsgemäße Abwandlung von Fig. 2a, wobei zusätzlich zu dem Display 1 unterhalb des Displays 1 ein Lichtleiter 11 für eine monochrome Hintergrundbeleuchtung vorgesehen ist, die den Lichtleiter 11 gleichmäßig durchstrahlt und das Display 1 gleichmäßig mit einer ersten Farbe von hinten beleuchtet, während das von der LED 3 ausgehende Licht mit einer zweiten Farbe durch den Lichtleiter 11 und das Display 1 strahlt und dadurch den farbig hervorgehobenen Bereich 10 diffus farbig hervorhebt. Das von der LED 3 ausgehende Licht wird durch den Lichtleiter 11 und das Display 1 gestreut, so dass der Bereich 10 farbig diffus erscheint.

Fig. 2c zeigt eine erfindungsgemäße Abwandlung von Fig. 2b, wobei die Unterseite des Lichtleiters 11 mit einer mehr oder weniger transparenten Folie 12 versehen ist, so dass das von der LED 3 ausgehende Licht die Folie 12, den Lichtleiter 11 und das Display 1 durchstrahlt und den Bereich 10 diffus hervorhebt, nachdem das von der LED 3 ausgehende Licht durch die Folie 12, den Lichtleiter 11 und das Display 1 gestreut wird.

Fig. 2d zeigt eine nicht zur Erfindung gehörige Abwandlung der Ausführung von Fig. 2c, bei der die Folie 12 an der mit der LED 3 und dem Bereich 10 korrespondierenden Position mit einer Durchtrittsöffnung 120 versehen ist, so dass das von der LED 3 ausgehende Licht lediglich durch den Lichtleiter 11 und das Display 1 strahlt und nur durch den Lichtleiter 11 und das Display 1 gestreut wird. Die Konfiguration von Fig. 2d ist besonders vorteilhaft für die Bereitstellung eines vergleichsweise stärkeren Signals und für Folien 12 mit geringer Transparenz.

Fig. 3 zeigt eine Abwandlung der Ausführung von Fig. 2c, bei der die Bestückungsseite der Leiterplatte 2 der Unterseite des Displays 1 abgewandt ist, wobei auf der Bestückungsseite der Leiterplatte 2 eine rückstrahlende LED 30 an einer Position angeordnet ist, die mit dem vorbestimmten hervorgehobenen Bereich 10 korrespondiert, und wobei eine entsprechende Öffnung 20 in der Leiterplatte 2 vorgesehen ist, so dass das Licht der LED 30 durch die Öffnung der Leiterplatte auf das Display 1 strahlt.

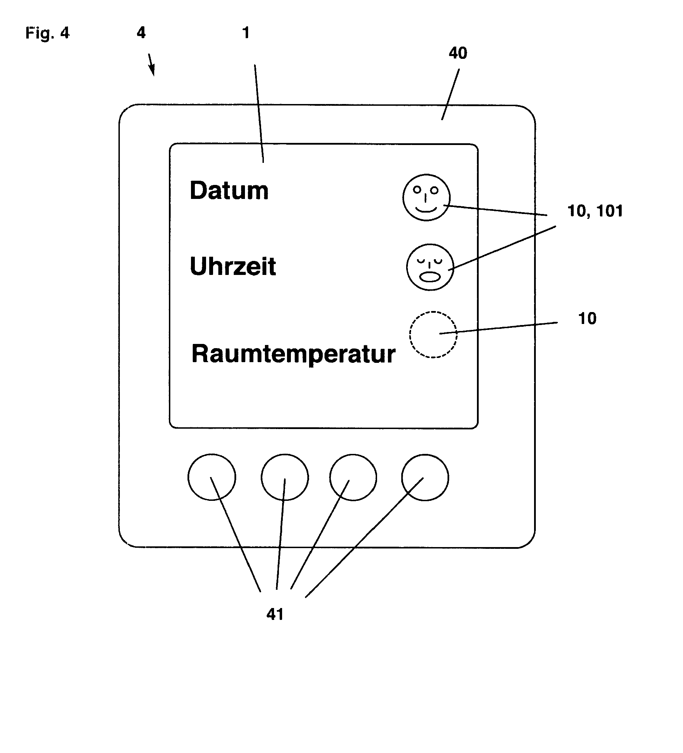

Fig. 4 zeigt eine schematische Darstellung eines Reglers 4 mit einem erfindungsgemäßen Display 1, das in einem Gehäuse 40 des Regler 4 angeordnet ist, wobei der Regler 4 geeignete Bedienelemente 41 umfassen kann, und wobei der Regler 4 insbesondere ein Heizungsregler oder Klimaregler sein kann mit den entsprechenden üblichen Anzeigen, wie beispielsweise Datum, Uhrzeit, Raumtemperatur etc., und wobei diese Anzeige auf dem Display 1 folgt, und wobei das Display 1 außerdem vorbestimmte Bereiche 10 umfasst, die zur Anzeige von Betriebszuständen farbig hervorgehoben werden können, wobei diese Bereiche 10 auch als geeignete Symbole 101 ausgebildet sein können.

### Bezugszeichenliste

- 1: Display
- 10: hervorzuhebender Bereich
- 101: Symbol
- 11: Lichtleiter
- 12: Folie
- 120: Durchtrittsöffnung
- 2: Leiterplatte
- 20: Öffnung in der Leiterplatte
- 3: LED
- 30: rückstrahlende LED
- 4: Regler
- 40: Gehäuse
- 41: Bedienelemente

## Patentansprüche

1. Monochromes Display zur sichtbaren Signalisierung verschiedener Zustände wenigstens eines Gerätes,
umfassend eine sichtbare Anzeigefläche (1) mit einem wählbaren Teilbereich (10) und getrennten Lichtquellen für die Hinterleuchtung der Anzeigefläche und des Teilbereiches, wobei der wählbare Teilbereich (10) der sichtbaren Anzeigefläche (1) zur sichtbaren Signalisierung des jeweiligen Gerätezustandes mittels wenigstens einer LED (3, 30) als Lichtquellen durch wenigstens eine wählbare Farbe besonders hervorhebbar ausgebildet ist, die sich von der wählbaren Farbgebung der sichtbaren Anzeigefläche außerhalb des Teilbereichs deutlich abhebt,
wobei die beiden Lichtquellen zur Beleuchtung der Anzeigefläche und des Teilbereichs voneinander getrennt steuerbar ausgebildet sind,
wobei unterhalb der Anzeigefläche (1) ein Lichtleiter (11) zur monochromen Hinterleuchtung der Anzeigefläche (1) angeordnet ist, und wobei das Licht der LED den hervorhebbaren Teilbereich der Anzeigefläche durch den Lichtleiter durchgehend beleuchtet,
**dadurch gekennzeichnet, dass** für die sichtbare Anzeigefläche sowie den wählbaren Teilbereich (10) ein gemeinsamer Lichtleiter (11) vorgesehen ist,
dass auf der unteren Oberfläche des Lichtleiters (11) eine halbtransparente Folie (12) angeordnet ist, und
dass das Licht der LED (3, 30) den hervorhebbaren Teilbereich (10) durch die Folie (12) und den Lichtleiter (11) durchgehend beleuchten und diffus hervorheben kann, dadurch dass das von der LED ausgehende Licht durch die Folie, den Lichtleiter und die Anzeigefläche gestreut wird.

2. Monochromes Display nach Anspruch 1, wobei , wenigstens ein Bereich des hervorhebbaren Teilbereichs (10) mit einem Symbol (101) versehen ist.

3. Monochromes Display nach einem der Ansprüche 1 und 2, wobei die LED (3) auf der Bestückungsseite einer Leiterplatte (2) angeordnet ist, die der Unterseite der Anzeigefläche (1) zugewandt ist.

4. Monochromes Display nach einem der Ansprüche 1 und 2, wobei die LED (30) auf der Bestückungsseite einer Leiterplatte (2) angeordnet und als rückstrahlende LED (30) ausgebildet ist, wobei die Bestückungsseite der Leiterplatte (2) der Unterseite der Anzeigefläche (1) abgewandt ist, und , wobei in der Leiterplatte (2) eine Öffnung (20) ausgebildet ist, durch die das Licht der LED (30) die Anzeigefläche (1) von unten beleuchten kann.

5. Regler (4) mit einem Display (1) nach einem der Ansprüche 1 bis 4.

6. Regler (4) nach Anspruch 5, wobei der Regler (4) ein Raumtemperaturregler und/oder ein Heizungsregler und/oder ein Klimaregler ist.

## Claims

1. Monochromatic display for visibly signalling different states of at least one device, comprising a visible display area (1) having a selectable partial region (10), and separate light sources for backlighting the display area and the partial region, wherein the selectable partial region (10) of the visible display area (1), for visibly signalling the respective device state by means of at least one LED (3, 30) as light source, is embodied as particularly highlightable by at least one selectable colour which clearly contrasts with the selectable colouration of the visible display area outside the partial region, wherein the two light sources, for illuminating the display area and the partial region, are embodied such that they are controllable separately from one another,
wherein an optical waveguide (11) for monochromatically backlighting the display area (1) is arranged below the display area (1) and wherein the light of the LED illuminates the highlightable partial region of the display area in a manner passing through the optical waveguide,
**characterized in that**
a common optical waveguide (11) is provided for the visible display area and the selectable partial region (10), **in that** a semitransparent film (12) is arranged on the lower surface of the optical waveguide (11), and **in that** the light of the LED (3, 30) can illuminate and diffusely highlight the highlightable partial region (10) in a manner passing through the film (12) and the optical waveguide (11), by virtue of the fact that the light emerging from the LED is scattered by the film, the optical waveguide and the display area.

2. Monochromatic display according to Claim 1, wherein at least one region of the highlightable partial region (10) is provided with a symbol (101).

3. Monochromatic display according to either of Claims 1 and 2, wherein the LED (3) is arranged on the populating side of a printed circuit board (2) facing the underside of the display area (1).

4. Monochromatic display according to either of Claims 1 and 2, wherein the LED (30) is arranged on the populating side of a printed circuit board (2) and is embodied as a back emitting LED (30), wherein the populating side of the printed circuit board (2) faces away from the underside of the display area (1), and wherein an opening (20) is formed in the printed circuit board (2), through which opening the light of the LED (30) can illuminate the display area (1) from below.

5. Regulator (4) comprising a display (1) according to any of Claims 1 to 4.

6. Regulator (4) according to Claim 5, wherein the regulator (4) is a room temperature regulator and/or a heating regulator and/or an air-conditioning regulator.

## Revendications

1. Afficheur monochrome pour la signalisation visible de divers états d'au moins un appareil, comprenant une surface d'affichage visible (1) comportant une section sélectionnable (10) et des sources de lumière séparées pour le rétroéclairage de la surface d'affichage et de la section, dans lequel la section sélectionnable (10) de la surface d'affichage visible (1) destinée à la signalisation visible de l'état respectif de l'appareil est réalisée au moyen d'au moins une LED (3, 30) en tant que source de lumière de manière à pouvoir être particulièrement mise en surbrillance par au moins une couleur sélectionnable qui s'affaiblit notablement à l'extérieur de la section par rapport à la coloration sélectionnable de la surface d'affichage visible,
dans lequel les deux sources de lumière sont conçues pour éclairer la surface d'affichage et la zone partielle d'une manière pouvant être commandée séparément l'une de l'autre,
dans lequel, en-dessous de la surface d'affichage (1), est disposé un guide d'ondes optique (11) destiné au rétroéclairage monochrome de la surface d'affichage (1), et dans lequel la lumière de la LED éclaire en continu la section pouvant être mise en surbrillance de la surface d'affichage par l'intermédiaire du guide d'ondes optique,
**caractérisé en ce que**
pour la surface d'affichage visible ainsi que pour la section sélectionnable (10), il est prévu un guide d'ondes optique commun (11),
**en ce que**, sur la surface inférieure du guide d'ondes optique (11) est disposée une feuille semi-transparente (12), et
**en ce que** la lumière de la LED (3, 30) peut éclairer en continu la section pouvant être mise en surbrillance (10) par l'intermédiaire de la feuille (12) et du guide d'ondes optique (11) et peut être mise en surbrillance de manière diffuse, en faisant en sorte que la lumière provenant de la LED soit diffusée par la feuille, le guide d'ondes optique et la surface d'affichage.

2. Afficheur monochrome selon la revendication 1, dans lequel au moins une zone de la section pouvant être mise en surbrillance (10) est pourvue d'un symbole (101) .

3. Afficheur monochrome selon l'une quelconque des revendications 1 et 2, dans lequel la LED (3) est disposée sur la face munie de composants d'une carte de circuit imprimé (2).

4. Afficheur monochrome selon l'une quelconque des revendications 1 et 2, dans lequel la LED (30) est disposée sur la face munie de composants d'une carte de circuit imprimé (2) et est réalisée sous la forme d'une LED rétroréfléchissante (30), dans lequel la face munie de composants de la carte de circuit imprimé (2) est tournée en direction opposée à la surface d'affichage (1), et dans lequel une ouverture (20) est ménagée dans la carte de circuit imprimé (2), à travers laquelle la lumière de la LED (30) peut éclairer la surface d'affichage (1) par le bas.

5. Régulateur (4) comportant un afficheur (1) selon l'une quelconque des revendications 1 à 4.

6. Régulateur (4) selon la revendication 5, dans lequel le régulateur (4) est un régulateur de température ambiante et/ou un régulateur de chauffage et/ou un régulateur de climatisation.
